# EUROPEAN PATENT SPECIFICATION

(11) **EP 0 781 088 B1**
(45) Date of publication and mention of the grant of the patent: **02.12.1998**
(21) Application number: 95930353.8
(22) Date of filing: 12.09.1995
(51) Int. Cl.: A01K 1/01

(54) **LITTER BOX FOR DOMESTIC ANIMALS**
TOILETTE FÜR HAUSTIERE
BOITE A LITIERE POUR ANIMAUX DOMESTIQUES

(30) Priority: 15.09.1994 US 306408
(43) Date of publication of application: 02.07.1997
(73) Proprietor: MAE PRODUCTS INC., Thamesford Ontario N0M 2M0 (CA)
(72) Inventor: EBERT, Michael, A., Thamesford, Ontario N0M 2M0 (CA)
(74) Representative: Gee, Steven William
(86) International application number: PCT/CA95/00515
(87) International publication number: WO 96/08139

(56) References cited:
- US-A- 4 522 150
- US-A- 4 846 104
- US-A- 4 886 014

## Description

### TECHNICAL FIELD

This invention relates to a litter box for a domestic animal such as a cat.

### BACKGROUND ART

Various devices have been proposed for mechanical separation of solid waste randomly buried in cat litter, which generally also includes litter clumped by urine wastes. Such separation of wastes from the clean litter is not an enjoyable task. Existing devices suffer generally from being cumbersome, expensive and/or ineffective, and/or from having complex moving parts. One such relevant device is disclosed in U.S. patent no. 4,522,150. That disclosure has all the features of the preamble of claim 1 of the present patent.

### DISCLOSURE OF INVENTION

In the invention, the litter box comprises an enclosure, having a bottom, a top, opposing side walls, and front and rear walls. There is an interior divider, with an upper imperforate portion which comprises a collection means, accessible from the exterior of the box, and a lower perforated portion substantially perpendicular to the bottom, the lower perforated portion constituting a separation means. The area of the litter box on one side of the divider is for the cat or other animal to occupy, a suitable entry port being provided through the front wall. If a suitable perforation size is selected for the separation means, clean litter material will pass through the separation means on rotation of the litter box about a horizontal axis parallel to the divider, and wastes and clumped litter material will be separated from the remaining clean litter material. On counter-rotation of the box to its original position, the clean litter material will pass back through the separation means for reuse, and the separated wastes will pass into the collection means, from which they can later be removed. A suitable collection means is a tray which can be held in position by the upper imperforate portion of the divider, and can be removed through an aperture in the front or rear wall of the box for emptying.

Preferably, the side wall on the side of the divider opposite the side occupied by the cat is convex (as viewed from the outside), with a smooth curvature to facilitate rotation of the box. Preferably, the wall is semi-circular.

Therefore, according to the invention, there is provided a litter box for domestic animal use comprising an enclosure, having a bottom, a top, opposing side walls, and front and rear walls, and further comprising an interior divider, with an upper imperforate portion and a lower perforated portion, the lower perforated portion constituting a litter separation means, an area of the litter box on one side of the divider being for the cat or other animal to occupy, a suitable entry port being provided into said area through said enclosure, said perforated portion having perforations sized to permit clean litter material to pass through said separation means on rotation of the litter box about a horizontal axis parallel to the divider, and to prevent solid wastes and clumped litter material from passing therethrough, to thereby separate said solid wastes and clumped litter from said clean litter material, characterised in that said lower perforated portion is mounted substantially perpendicular to said bottom and in that said upper imperforated portion comprises a collection means.

The box provides the advantages of a simple and efficient method of performing the task of cleaning the litter, with a substantial reduction in the unpleasantness of the task.

### BRIEF DESCRIPTION OF DRAWINGS

In drawings which illustrate the embodiments of the invention,
Fig. 1 is a perspective view of the prior art;
Fig. 2 is a perspective view of the preferred embodiment of the invention;
Fig. 3 is a cross-sectional side elevation view of the embodiment shown in Fig. 2;
Fig. 4A through 4E are respective sections along IV-IV of Fig. 2, Fig. 4A showing the box in its rest position, and Figs. 4B through 4E showing successive rotational positions of the box, showing the separation process;
Fig. 5 is a perspective view showing the removal process for the collection tray of the embodiment shown in Fig. 2;
Fig. 6 is a rear perspective view of an embodiment including an optional removable deodorizer.

### BEST MODE FOR CARRYING OUT THE INVENTION

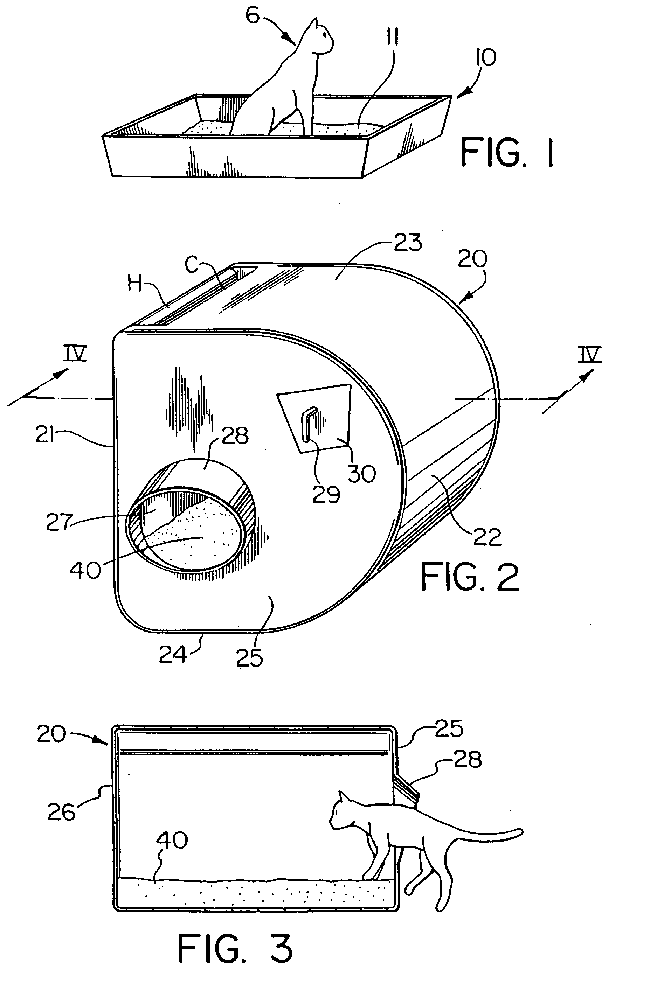

Referring to Fig. 1, the traditional cat litter box comprises an open tray **10**, partly filled with litter **11**. Solid wastes and litter clumped with urine are removed from the tray by various scooping methods, for disposal.

Referring to Figs. 2 and 3, the invention uses an enclosed box **20** having a top **23**, a bottom **24**, opposing side walls **21** and **22**, and front and rear walls **25** and **26** respectively. The side wall **22** is preferably but not necessarily semi-circular, or convex with a smooth curvature, to facilitate rotation of the box. Other configurations can also be used, but it has been found that the semi-circular side wall **22** provides the most convenient rotation for the cleaning process.

An aperture **27**, preferably having a peak **28** along its upper portion, provides the entrance for the cat **6** to the litter material **40**. A collection tray **30** is accessible from the exterior of the box **20** and can be removed from the box for emptying by a handle **29**. A concave area **C** at the top surface **23** accommodates a handle **H** to facilitate rotation of the box for the cleaning process.

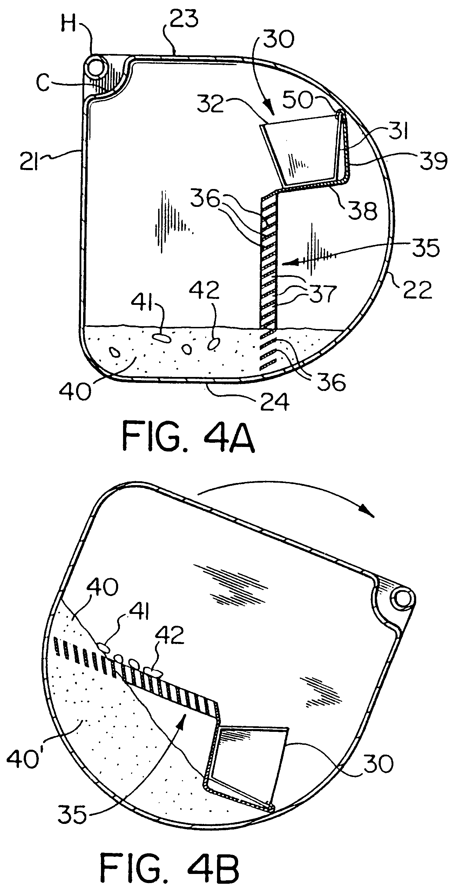

Referring to Fig. 4A, a divider **35** comprises a lower perforated portion, shown here as parallel longitudinally inclined slats **36** defining apertures **37**, spaced appropriately so that clean litter can pass through the apertures, but solid waste and clumped litter cannot. The upper portion of the divider comprises a tray supporting surface **38**, and a side support **39**, terminating in a glide rail **50** which engages the semi-circular side wall **22** at a suitable location. The glide rail also engages an upper edge **32** of a collection tray **30** to retain the tray in position, but without preventing removal of the tray for emptying.

The area accessible to the cat is shown to the left of the divider **35** in Fig. 4A. Litter material **40** receives solid wastes **41** and on receiving urine forms clumps **42**. The proportions of the flat bottom **24** and the semi-circular side wall **22**, and the low centre of gravity of the box **20**, when filled with litter material **40** to an appropriate depth, together with the location of the divider **35**, are such that there will be no unintended rotation of the box during use by, and resulting from movement of, the cat.

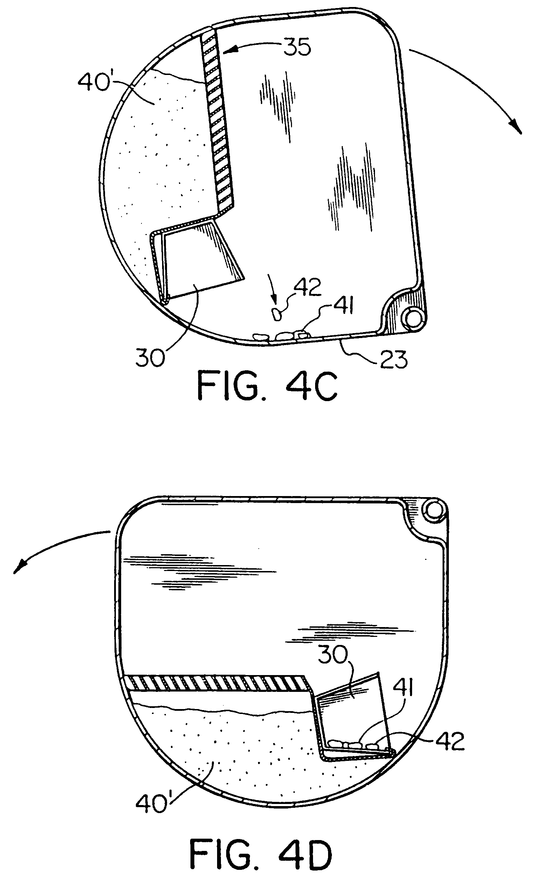

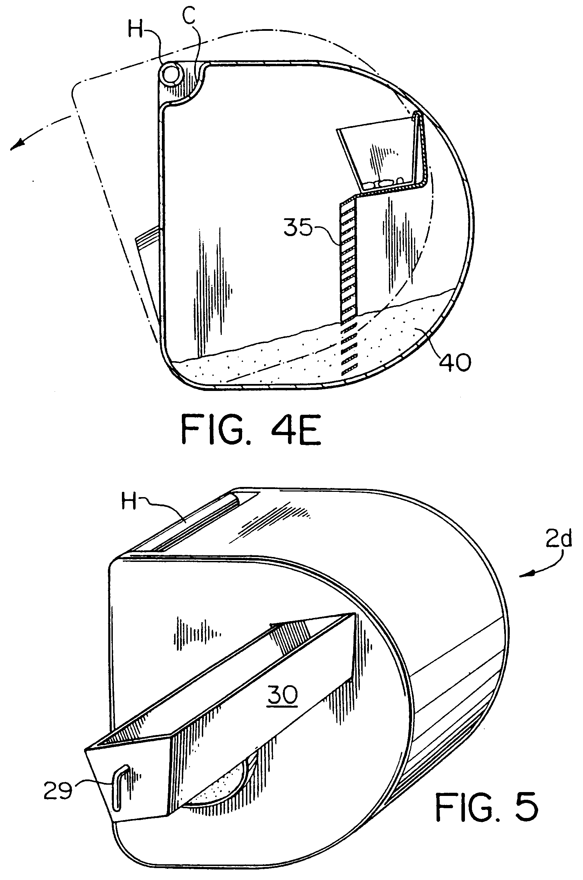

Referring now to Figs. 4B through 4E, the rotation process for separation of the waste materials from the clean litter is shown. The box is rotated from the normal resting position shown in Fig. 4A, such as by using the handle **H**, along the semi-circular side wall **22**. As the box approaches the position shown in Fig. 4B, the unsoiled litter material passes through the apertures **37**, but the solid wastes **41** and clumped litter **42** remain on what is now the upper surface of the divider **35**. As the rotation continues into the position shown in Fig. 4C, the wastes fall from the now vertically inverted divider **35**, to the inner surface of the top **23**, the cleaned litter **40'** remaining in the area between the divider and the side wall **22**. The box is then counter-rotated from the position shown in Fig. 4C, and as the rotation reaches the position shown in Fig. 4D, the wastes **41** and **42** by means of gravity enter the collection tray **30**. As the counter-rotation continues towards the position shown in Fig. 4E, the wastes remain in the collection tray, but the cleaned litter material **40'** returns through the apertures **37**, so that the box is again ready for use. A small amount of over-rotation as shown by the phantom lines on Fig. 4E will assist in achieving a suitably level surface for the litter **40** as shown in Fig. 3. For this purpose, the corner at the intersection between the bottom **24** and the side wall **21** is preferably rounded as shown in the drawings. After the box has been returned to its original position, the collection tray **30** can be removed from the box by means of the handle **29**, so that it can be emptied.

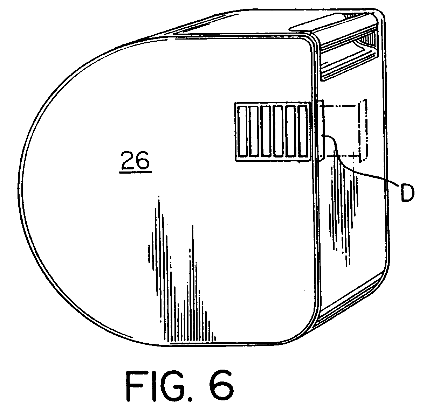

If desired, a deodorizing means such as a deodorizer tray **D** can be provided at a suitable location accessible through the rear wall **26**, as shown in Fig. 6.

The perforated portion of the divider **35** can be of any suitable material, such as a screen or longitudinally inclined slats. If a mesh screen is used, a suitable mesh size for efficient separation of the wastes is between No. 6 and No. 8. It has been found preferable to use longitudinally inclined parallel slats as shown, the preferred angle of inclination being approximately 30 degrees from the plane of the perforated portion of the divider.

### INDUSTRIAL APPLICABILITY

The invention provides a litter box which makes waste removal easy and relatively pleasant.

## Claims

1. A litter box for domestic animal use comprising an enclosure, having a bottom (24), a top (23), opposing side walls (21, 22), and front and rear walls (25, 26), and further comprising an interior divider (35), with an upper imperforate portion (38, 39) and a lower perforated portion (35), the lower perforated portion constituting a litter separation means, an area of the litter box on one side of the divider being for the cat or other animal to occupy, a suitable entry port (27) being provided into said area through said enclosure, said perforated portion having perforations (37) sized to permit clean litter material (40) to pass through said separation means on rotation of the litter box about a horizontal axis parallel to the divider, and to prevent solid wastes and clumped litter material from passing therethrough, to thereby separate said solid wastes and clumped litter from said clean litter material, characterised in that said lower perforated portion (35) is mounted substantially perpendicular to said bottom (24) and in that said upper imperforated portion (35) comprises a collection means (30).

2. A litter box as claimed in claim 1, further characterized by the side wall (22) on the side of the divider opposite the side occupied by the animal being convex, with a smooth curvature to facilitate rotation of the box.

3. A litter box as claimed in claim 2, where said convex side wall (22) is semi-circular.

4. A litter box as claimed in claim 1, wherein said separation means comprises a mesh screen.

5. A litter box as claimed in claim 1, wherein said separation means comprises a plurality of inclined slats (36).

6. A litter box as claimed in claim 3, wherein said slats are disposed at an angle of inclination of approximately 30 degrees to the plane of said divider.

7. A litter box as claimed in claim 1, wherein said collection means comprises a tray (30) retained in a collection position by said imperforate portion of said divider, said tray being removable through an opening in said front wall.

8. A litter box as claimed in claim 7, wherein for said collection position said tray is retained by upper imperforate portion of said divider and a glide rail (50) adjacent an inner surface of said side wall which engages an upper side edge (32) of said tray.

## Patentansprüche

1. Eine Haustiertoilette zum Gebrauch durch Haustiere, die eine Umschließung enthält, einen Boden (24), ein Oberteil (23), gegenüberliegende Seitenwände (21, 22) und Vorder- und Hinterwände (25, 26) enthält, und des weiteren eine innere Trennwand (35) mit einem oberen unperforierten Teil (38, 39) und einen unteren perforierten Teil (35) enthält, wobei der untere perforierte Teil ein Streutrennungswerkzeug darstellt, ein Bereich der Haustiertoilette auf der einen Seite der Trennwand zur Unterbringung der Katze oder des jeweiligen Tieres dient, eine angemessene Eingangsöffnung (27) in besagten Bereich durch besagte Umschließung bereitgestellt wird, besagter perforierter Teil Perforationen (37) aufweist, deren Größe sauberes Streumaterial (40) durch besagtes Trennungswerkzeug bei Rotation der Haustiertoilette entlang einer zur Trennwand parallelen Horizontalachse passieren läßt, und feste Abfälle und verklumptes Streumaterial am Durchgehen hindert, damit hierdurch besagte feste Abfälle und verklumptes Streu von besagtem sauberen Streumaterial getrennt werden, gekennzeichnet dadurch, daß besagter unterer perforierter Teil (35) im wesentlichen senkrecht zu besagtem Boden (24) montiert wird und daß besagter oberer unperforierter Teil (35) ein Sammelwerkzeug (30) darstellt.

2. Eine Haustiertoilette wie in Patentanspruch 1, des weiteren gekennzeichnet durch die Seitenwand (22) auf der Seite der Trennwand, gegenüberliegend der Seite, die durch das Tier eingenommen wird, die konvex und mit einer leichten Kurvierung zum Ermöglichen der Rotation der Haustiertoilette versehen ist.

3. Eine Haustiertoilette wie in Patentanspruch 2, bei der besagte konvexe Seitenwand (22) halbkreisförmig ist.

4. Eine Haustiertoilette wie in Patentanspruch 1, bei der besagtes Trennungswerkzeug einen Maschenschirm beinhaltet.

5. Eine Haustiertoilette wie in Patentanspruch 1, bei der besagtes Trennungswerkzeug eine Mehrzahl von geneigten Rippen (36) beinhaltet.

6. Eine Haustiertoilette wie in Patentanspruch 3, bei der besagte Rippen in einem Neigungswinkel von ca. 30 Grad zur Ebene der besagten Trennwand angeordnet sind.

7. Eine Haustiertoilette wie in Patentanspruch 1, bei der besagtes Sammelwerkzeug eine Schale (30) umfaßt, die durch besagten unperforierten Teil der besagten Trennwand in einer Sammelposition gehalten wird, wobei besagte Schale durch eine Öffnung in besagter Vorderwand entfernbar ist.

8. Eine Haustiertoilette wie in Patentanspruch 7, bei der für die besagte Sammelposition besagte Schale durch den oberen unperforierten Teil der besagten Trennwand und eine Gleitschiene (50), die sich an die innere Oberfläche besagter Seitenwand anschließt, gehalten wird, die an der oberen seitlichen Ecke (32) besagter Schale einrastet.

## Revendications

1. Une boîte à litière destinée aux animaux domestiques comprenant une enceinte, ayant un fond (24), un dessus (23), des parois latérales opposées (21, 22) et des parois avant et arrière (25,26), et comprenant de plus une cloison intérieure (35), avec une partie supérieure imperforée (38, 39) et une partie inférieure perforée (35), la partie inférieure perforée (35) constituant un moyen de séparation de litière, une zone de la boîte à litière d'un côté de la cloison étant destinée à l'occupation d'un chat ou d'un autre animal, une entrée appropriée (27) étant prévue dans ladite zone de la dite enceinte, ladite partie perforée ayant des perforations (37) dimensionnées pour permettre au matériau de litière propre (40) de passer à travers ledit moyen de séparation lors de la rotation de la boîte à litière autour d'un axe horizontal parallèle à la cloison, et d'empêcher les déchets solides et le matériau de litière aggloméré de passer à travers ledit moyen de séparation, de manière à séparer lesdits déchets solides et matériau de litière aggloméré dudit matériau de litière propre, caractérisé en ce que ladite partie inférieure perforée (35) est montée en grande partie perpendiculaire audit fond (24) et que ladite partie supérieure imperforée (35) comprend un moyen de ramassage (30).

2. Une boîte à litière selon la revendication 1, caractérisée de plus en ce que la paroi latérale (22) du côté de la cloison opposé au côté occupé par l'animal est convexe, avec une courbure régulière facilitant la rotation de la boîte.

3. Une boîte à litière selon la revendication 2, où ladite paroi latérale convexe (22) est semi-circulaire.

4. Une boîte à litière selon la revendication 1, dans laquelle ledit moyen de séparation est un grillage.

5. Une boîte à litière selon la revendication 1, dans laquelle ledit moyen de séparation est une pluralité de lamelles inclinées (36).

6. Une boîte à litière selon la revendication 3, dans laquelle lesdites lamelles sont disposées à un angle d'inclinaison d'environ 30 degrés par rapport au plan de ladite cloison.

7. Une boîte à litière selon la revendication 1, dans laquelle ledit moyen de ramassage comprend un bac (30) retenu dans une position de ramassage par ladite partie imperforée de ladite cloison, ledit bac pouvant être retiré par une ouverture dans ladite paroi avant.

8. Une boîte à litière selon la revendication 7, dans laquelle ledit bac dans ladite position de ramassage est retenu par la partie supérieure imperforée de ladite cloison et un rail glisseur (50) adjacent à une surface intérieure de ladite cloison latérale qui engage un bord latéral supérieur (32) dudit bac.
